(19) Europäisches Patentamt
European Patent Office
Office européen des brevets

(11) **EP 1 658 485 B1**

(12) **EUROPÄISCHE PATENTSCHRIFT**

(45) Veröffentlichungstag und Bekanntmachung des Hinweises auf die Patenterteilung:
**24.07.2013 Patentblatt 2013/30**

(21) Anmeldenummer: 04764211.1

(22) Anmeldetag: **17.08.2004**

(51) Int Cl.:
*G01N 17/00* *(2006.01)*

(86) Internationale Anmeldenummer:
**PCT/EP2004/009223**

(87) Internationale Veröffentlichungsnummer:
**WO 2005/019808 (03.03.2005 Gazette 2005/09)**

(54) **VERFAHREN ZUR DETEKTION DER DURCH EINEN UMWELTEINFLUSS HERVORGERUFENEN EIGENSCHATSÄNDERUNG EINER PROBE**

METHOD FOR DETECTING THE MODIFICATION OF A CHARACTERISTIC OF A SAMPLE CAUSED BY AN ENVIRONMENTAL INFLUENCE

PROCEDE POUR DETECTER LA MODIFICATION DE PROPRIETE D'UN ECHANTILLON, ENGENDREE PAR UNE INFLUENCE AMBIANTE

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.08.2003 DE 10337877**

(43) Veröffentlichungstag der Anmeldung:
**24.05.2006 Patentblatt 2006/21**

(73) Patentinhaber: **BASF SE**
**67056 Ludwigshafen (DE)**

(72) Erfinder:
• **SENS, Rüdiger**
**67069 Ludwigshafen (DE)**
• **THIEL, Erwin**
**57299 Burbach-Gilsbach (DE)**
• **BORNEMANN, Rainer**
**76571 Gaggenau-Bad Rotenfels (DE)**

(56) Entgegenhaltungen:
**EP-A- 0 908 716    EP-A- 1 229 321**
**GB-A- 1 601 570    US-A- 5 138 892**
**US-B1- 6 522 787**

## Beschreibung

Die Erfindung betrifft ein Verfahren zur Detektion der durch einen Umwelteinfluss hervorgerufenen Änderung einer physikalisch messbaren Eigenschaft einer Probe.

Für die industrielle Produktion von Farbstoffen, Pigmenten, Lacken, UV-Stabilisatoren und Sonnenschutzmitteln ist es von entscheidender Bedeutung, die Lichtechtheit der Produkte zu kennen. Derzeit wird die Lichtechtheit eines Produktes gemessen, indem das Produkt mit Licht, dessen spektrale Verteilung derjenigen von Sonnenlicht auf der Erdoberfläche entspricht, bestrahlt wird. Nach Bestrahlung wird die Farbänderung mit Hilfe von Referenzsystemen quantifiziert. Nachteilig an dieser Vorgehensweise sind die zum Teil sehr langen Bestrahlungszeiten, die notwendig sind, um bei vielen Produkten eine Farbänderung erkennbar zu machen. So betragen nach einschlägigen DIN-Normen die Bestrahlungszeiten 1000 h und mehr. Für sehr lichtechte Proben betragen sie 10 bis 50 Jahre. Anschließend wird gegen eine Farbskala, beispielsweise die blaue Wollskala, referenziert. Nachteilig an dieser Vorgehensweise ist ferner, dass ein Mensch die Bewertung vornehmen muss und diese Bewertung daher von einem subjektiven Eindruck bestimmt wird.

Beispiele für Proben, welche besonders lange Belichtungszeiten benötigten, sind Fassadenfarbe, Autobahnschilder, Dichtungsmaterialien für Gebäude, Elektroisolatoren, Dachziegeln und Sicherheitsscheiben. Weitere Proben werden in den nachstehenden Normen für Belichtung bzw. Bewitterung genannt.

Einschlägige Normen für die Bewitterung mit künstlichem Tageslicht sind ISO 4892 (1994) für Kunststoffe, ISO 11341 (1994) für Lacke und Anstrichstoffe, ISO 11507 (1997) für Beschichtungen in Geräten, ISO 3917 (1999) für Straßenfahrzeuge Sicherheitsscheiben, ISO 11431 (2002) für Hochbau-Fugendichtstoffe, ISO 105-B02 (1994) für Textilien-Farbechtheitsprüfungen und ISO 105-B04 (1994) für Textilien-Farbechtheit-Bewitterung.

Einschlägige Normen für direkte Bewitterung sind ASTM G7, ISO 877, ISO 2810, ASTM D4141C (Black Box) und ASTM G24 (Unter-Glas-Belichtung).

Mit dem Ziel, die notwendige Bestrahlungszeit zu verringern, werden die Produkte häufig mit einem mehrfachen der Sonnenintensität bestrahlt. Es hat sich jedoch gezeigt, dass die mit erhöhter Bestrahlungsintensität gemessenen Lichtechtheiten häufig nicht mit denjenigen übereinstimmen, die unter natürlichen Bedingungen vorliegen. Mit anderen Worten ist die in der bestrahlten Probe erzeugte Farbänderung $\Delta F$ nicht nur von dem als Strahlendosis S bezeichneten Produkt aus Intensität I und Bestrahlungszeit $\Delta t$ abhängig, sondern explizit auch von der Intensität 1 der Strahlung $\Delta F = f(S, I)$.

Aufgabe der Erfindung ist es, ein Messverfahren bereitzustellen, mit dem die durch Licht induzierte Farbänderung an einer Probe bereits nach kurzer Bestrahlungszeit bestimmt werden kann, ohne dass von natürlichen Bedingungen abweichende Bestrahlungsintensitäten angewendet werden müssen.

Gelöst wird die Aufgabe durch ein Verfahren zur Detektion der durch einen Umwelteinfluss hervorgerufenen Änderung einer physikalisch messbaren Eigenschaft einer Probe, bei dem man

(i) die Probe während einer Einwirkungszeit $\Delta t$ dem Umwelteinfluss aussetzt, wobei man den Umwelteinfluss mit einer bekannten ortsabhängigen Intensitätsverteilung I(x, y) (Intensitätsmuster), der eine Musterfunktion M(x, y) zu Grunde liegt, auf die Probe einwirken lässt wobei die Einwirkung des Umwelteinflusses auf die Probe nicht horoger ist,

(ii) anschließend die Transmission, Reflexion oder Streuung von Analysestrahlung durch die Probe in Abhängigkeit der Ortskoordinaten (x, y) und der Wellenlänge ist der Analysestrahlung detektiert und so eine Antwortfunktion A(x, y, $\lambda$) bestimmt, welche die Intensität der transmittierten, reflektierten und/oder gestreuten Analysestrahlung in Abhängigkeit von den Ortskoordinaten (x, y) der Probe und der Wellenlänge $\lambda$ wiedergibt,

(iii) durch Korrelationsanalyse die Korrelation der bekannten ortsabhängigen Intensitätsverteilung I(x, y) des Umwelteinflusses oder der dieser Intensitätsverteilung zu Grunde liegenden Musterfunktion M(x, y) mit der Antwortfunktion A(x, y, $\lambda$) bestimmt, wobei diese Korrelation ein Maß für die durch den Umwelteinfluss hervorgerufenen Änderung der physikalisch messbaren Eigenschaft der Probe ist.

In einem ersten Schritt (i) wird die zu untersuchende Substratoberfläche einem Umwelteinfluss ausgesetzt. Umwelteinflüsse im Sinne der vorliegenden Erfindung sind beliebige äußere Einwirkungen auf die Probe, welche geeignet sind, deren physikalisch messbare Eigenschaften zu ändern. Umwelteinflüsse im Sinne der vorliegenden Erfindung umfassen die Einwirkung von Licht oder - allgemeiner - Strahlung, von mechanischen Kräften, von Chemikalien, von Gasen, von Mikroorganismen, von radioaktiver Strahlung, von Schall (beispielsweise Ultraschall) und von Wärme auf die Substratoberfläche. Der Umwelteinfluss kann beispielsweise durch Bestrahlung oder Bewitterung der Substratoberfläche oder durch Auftragen von Chemikalien auf die Substratoberfläche bewirkt werden. Mit "Chemikalien" sind dabei alle Stoffe oder Stoffgemische (beispielsweise auch kosmetische Formulierungen) gemeint, die mit der Substratoberfläche bzw. mit deren Inhaltsstoffen reagieren können. Der Umwelteinfluss kann auch ein Zusammenspiel von mehreren der oben beispielhaft genannten äußeren Einwirkungen beinhalten. So wirken bei der Photooxidation Licht und atmosphärischer Sauerstoff zusammen. Bei Bewitterungversuchen im Freien sind die bewitterten Proben im Allgemeinen der Einwirkung von Licht, Chemikalien (Wasser, Säuren etc.), Gasen, Mikroorganismen, Wärme sowie mechanischen Einwirkungen (Wind, Regen) ausgesetzt.

Physikalisch messbar im Sinne der vorliegenden Erfindung sind die Eigenschaften der Substratoberfläche, wenn sie über die Wechselwirkung der Probe mit einer auf die Probe oder in die Probe eingestrahlten Analysestrahlung erfassbar sind. Analysestrahlung kann jede beliebige Strahlung sein, die mit der Probe wechselwirken und von ihr transmittiert, reflektiert oder gestreut werden kann. Beispiele sind elektromagnetische Strahlung, Partikelstrahlung (Neutronen, radioaktive alpha- oder beta-Strahlung) oder akustische Strahlung (beispielsweise Ultraschall).

Der Begriff der Probe ist denkbar weit gefasst und umfasst allgemein Objekte, die gezielt bestimmten Umwelteinflüssen ausgesetzt werden können. Beispielsweise kann die Probe ein mit einer Pigmentschicht beschichtetes Substrat sein, welches zur Untersuchung der Lichtechtheit der Pigmentschicht einer UV-Strahlung ausgesetzt wird. Bei der Probe kann es sich um ein Feld handeln, das zur Untersuchung der Wirksamkeit von Herbiziden oder Fungiziden mit diesen behandelt und später aus der Luft aufgenommen wird. Soll die Abriebsfestigkeit oder Witterungsbeständigkeit von Fassadenbeschichtungen untersucht werden, so kann es sich bei der Probe um eine Gebäudewand handeln, die natürlich bewittert oder einem Sandstrahl ausgesetzt wird.

Es können lediglich oberflächliche Eigenschaftsänderungen durch den Umwelteinfluss induziert und anschließend detektiert werden. Es können aber auch im Innern einer Probe Eigenschaftsänderungen durch einen Umwelteinfluss induziert und anschließend detektiert werden. Letzteres hängt auch von der Durchlässigkeit der Probe für den Umwelteinfluss und die verwendete Analysestrahlung ab. Strahlung kann beispielsweise oberflächlich reflektiert oder gestreut werden oder aber auch die Probe völlig durchdringen. Strahlung kann auch durch geeignete Vorrichtungen auf eine Ebene im Innern der Probe fokussiert und damit die Eigenschaftsänderung in dieser Ebene detektiert werden.

In einer Ausführungsform des erfindungsgemäßen Verfahrens wird die Oberfläche einer Probe untersucht. Nachfolgend wird auch der Begriff "Substratoberfläche" für die zu untersuchende Oberfläche einer Probe verwendet. Der Begriff umfasst dabei nicht nur die geometrisch verstandene Oberfläche der Probe, sondern auch unterhalb dieser geometrischen Oberfläche liegende tiefere Schichten der Probe, welche noch der Messung mittels der gewählten physikalischen Methode zugänglich sind.

Wesentliches Merkmal der Erfindung ist, dass der Umwelteinfluss, der die Eigenschaften der Probe zu ändern geeignet ist, mit einer bestimmten, bekannten ortsabhängigen Intensitätsverteilung I(x, y) auf die Probe einwirkt. Mit anderen Worten: die Einwirkung des Umwelteinflusses auf die Probe bzw. Substratoberfläche ist nicht homogen, sondern weist ein Intensitätsmuster auf. Dieses Intensitätsmuster kann ein einfaches geometrisches Muster sein, beispielsweise ein Streifenmuster oder ein Schachbrett-Muster. Das Intensitätsmuster kann aber auch völlig unregelmäßig sein.

Ist der auf die Probe bzw. Substratoberfläche einwirkende Umwelteinfluss Licht mit einer bestimmten Wellenlänge oder mit einer bestimmten spektralen Verteilung, so ist die Intensität mit der Strahlungsintensität gleichzusetzen, welche in $W/cm^2$ gemessen wird. Ist der einwirkende Umwelteinfluss die Einwirkung mechanischer Kräfte, die beispielsweise dadurch verursacht wird, dass eine Substratoberfläche einem Sandstrahl ausgesetzt wird, so kann die Intensität dieses Umwelteinflusses mit der Zahl der pro Zeit- und Flächeneinheit auf die Substratoberfläche auftreffenden Sandteilchen gleichgesetzt werden. Ist der einwirkende Umwelteinfluss die Einwirkung von Chemikalien oder Gasen, so kann die Intensität dieses Umwelteinflusses mit der Konzentration eines bestimmten Stoffes am Ort der Substratoberfläche gleichgesetzt werden, Ist der einwirkende Umwelteinfluss die Einwirkung von Mikroorganismen, so kann die Intensität dieses Umwelteinflusses mit der Zahl der Mikroorganismen pro Flächeneinheit gleichgesetzt werden.

Im Allgemeinen wird das Intensitätsmuster Bereiche mit einer bestimmten, im wesentlichen konstanten Intensität aufweisen und daneben Bereiche aufweisen, wo die Intensität des Umwelteinflusses nahe null oder gleich null ist, wo also im wesentlichen keine Einwirkung auf die Substratoberfläche erfolgt. Diese Bereiche bilden zweckmäßiger Weise ein einfaches geometrisches Muster. Es sind aber auch kontinuierliche Intensitätsverläufe zwischen Bereichen niedriger und hoher Intensität möglich.

Das Intensitätsmuster des Umwelteinflusses wird vorzugsweise dadurch erzeugt, dass man den Umwelteinfluss durch eine oder mehrere Masken, welche eine bestimmte ortsabhängige Transmissionsfunktion T(x, y) (Transmissionsmuster) aufweisen, auf die Probe bzw. Substratoberfläche einwirken lässt, und so die ortsabhängige Intensitätsverteilung I(x, y) als Abbild der Maske auf der Probe bzw. Substratoberfläche erzeugt. In diesem Fall entspricht die dem Intensitätsmuster I(x, y) zu Grunde liegende Musterfunktion M(x, y) der Transmissionsfunktion T(x, y) der Maske.

Die Transmissionsfunktion T(x, y) beschreibt die ortsabhängige Durchlässigkeit der Maske für den Umwelteinfluss. Ist der einwirkende Umwelteinfluss Licht, so kann die Maske beispielsweise in einer für das Licht im wesentlichen transparenten Folie bestehen, welche ein Muster aufgedruckt enthält, wobei die bedruckten Bereiche für Licht einer bestimmten Wellenlänge oder eines bestimmten Wellenlängenbereichs eine geringere Transmission aufweisen oder im wesentlichen intransparent sind. Diese Folie kann auf die Probe aufgelegt werden, um bei der Bestrahlung auf bzw. in der Probe das entsprechende Intensitätsmuster zu erzeugen. Ist der einwirkende Umwelteinfluss die durch einen Sandstrahl bewirkte mechanische Einwirkung auf eine Substratoberfläche, so kann die Maske eine Schablone sein, welche Aussparungen aufweist, durch die der Sandstrahl auf die Substratoberfläche einwirken kann, welche die Substratoberfläche im übrigen aber bedeckt und vor der Einwirkung durch den Sandstrahl schützt. Ist der einwirkende Umwelteinfluss die Einwirkung von Chemikalien, von Gasen oder Mikroorganismen, so kann die Maske ebenso eine Schablone mit Aussparungen sein. Im Falle von Chemikalien oder Mikroorganismen können die diese enthaltenden Formulierungen auf die Schablone aufgestrichen werden. Die von der Schablone bedeckten Bereiche einer Substratoberfläche werden dann vor der Einwirkung der Formulierungen geschützt, während sie in den Aussparungen der Schablone mit der Formulierung in Kontakt kommt. Bei Bewitterungsversuchen im Freien werden schließlich die Bereiche einer Substratoberfläche, die von der Schablone bedeckt sind, vor allen relevanten Umwelteinflüssen (Licht, Chemikalien, Gase, Mikroorganismen, mechanische Einwirkungen) geschützt. Auch radioaktive Strahlung (alpha-, beta-Strahlung) kann man unter Verwendung einer Schablone, welche eine ausreichende Abschirmwirkung aufweist, musterartig auf eine Probe einwirken lassen.

Es ist aber auch möglich, ein Intensitätsmuster ohne die Verwendung einer Maske auf die Probe bzw. Substratoberfläche aufzubringen. So kann bei der Einwirkung von Licht auf eine Probe die Intensitätsverteilung I(x, y) als Beugungsmuster auf der Probe erzeugt werden. Chemikalien und/oder radioaktive Substanzen können als Muster (welches durch eine Musterfunktion beschrieben wird) auch ohne Verwendung einer Schablone auf eine Substratoberfläche aufgebracht werden.

Wird eine Probe beregnet, kann das Intensitätsmuster unter Verwendung einer Mikrodüsenanordnung oder eines Regenschutzgitters erzeugt werden. Ist der Umwelteinfluss eine thermische Einwirkung auf die Probe, so kann das Intensitätsmuster durch eine Heizdrahtanordnung erzeugt werden. Die Anordnung bzw. das Gitter wird durch eine entsprechende Musterfunktion beschrieben. Mechanische Schwingungsmuster können durch stehende Schallwellen in Hohlraumresonatoren erzeugt werden, wobei Volumenschwingungen oder Oberflächenschwingungen angeregt werden können. Bei natürlicher Beschallung kann ein Schall absorbierendes Gitter eingesetzt werden.

Die Probe wird während einer bestimmten Einwirkungszeit $\Delta t$ dem Umwelteinfluss ausgesetzt. Die Einwirkungszeit $\Delta t$ hängt von Art und Intensität des Umwelteinflusses ab und kann Sekunden, Minuten, Stunden oder Tage, beispielsweise eine Sekunde bis 10 Tage, betragen.

In einem zweiten Schritt (ii) wird die Probe, die dem Umwelteinfluss ausgesetzt war, physikalisch analysiert. Dazu wird die Transmission, Reflexion oder Streuung von Analysestrahlung durch die Probe in Abhängigkeit von den Ortskoordinaten (x, y) der Probe detektiert. Die Analysestrahlung kann eine diskrete Wellenlänge, beispielsweise die Wellenlänge der CO-Bande bei 5,8 $\mu$m (entsprechend 1720 cm$^{-1}$) aufweisen oder aber einen Wellenlängenbereich umfassen, beispielsweise den gesamten sichtbaren Spektralbereich von 400 bis 800 nm. Die Transmission, Reflexion oder Streuung der Analysestrahlung durch die Probe ist im Allgemeinen von der Wellenlänge der Analysestrahlung abhängig. Es wird somit eine Antwortfunktion A(x, y, $\lambda$) erhalten, welche die Intensität des transmittierten, reflektierten oder gestreuten Analyselichts in Abhängigkeit von den Ortskoordinaten (x, y) und der Wellenlänge $\lambda$ wiedergibt. Diese Antwortfunktion kann für diskrete Wellenlängen $\lambda$ oder für einen oder mehrere Wellenlängenbereiche $\Delta\lambda$ (beispielsweise für den roten, grünen und blauen Bereich des sichtbaren Lichts) bestimmt werden.

Die Wellenlänge der Analysestrahlung bzw. deren spektrale Zusammensetzung richtet sich nach der untersuchten Probe und der vorliegenden Fragestellung. Oftmals wird es sich um Analyselicht im UV-VIS und/oder NIR-Bereich des Spektrums handeln. Soll beispielsweise die Lichtechtheit von Farbmitteln untersucht werden, also die mit dem menschlichen Auge wahrnehmbare Änderung in der Färbung einer Probe, so wird das Analyselicht im Wesentlichen die spektrale Zusammensetzung von Tageslicht haben bzw. Tageslicht sein. Soll beispielsweise die lichtinduzierte Alterung von Kunststoffen durch Bestimmung der CO-Zahl der Kunststoffe untersucht werden, so wird das Analyselicht NIR-Licht der Wellenlänge 5,8 $\mu$m sein. Soll die Stabilität von UV-Absorbern untersucht werden, so wird die Analysestrahlung UVA- und/oder UVB-Licht umfassen.

Nach der untersuchten Probe und der Fragestellung richtet sich auch der verwendete Messaufbau. Soll etwa das Glanzverhalten einer Substratoberfläche, beispielsweise einer Lackoberfläche, analysiert werden, so eignet sich hierzu die Verwendung einer telezentrischen Messoptik, die Einflüsse der Streuung aus tieferen Schichten der Probe weitgehend eliminiert. Soll hingegen die Lichtechtheit von Farbmitteln untersucht werden, so eignet sich hierzu die Verwendung eines konfokalen Farbmesssystems, das die störenden Einflüsse des Glanzes weitgehend unterdrückt.

In einer Ausführungsform des erfindungsgemäßen Verfahrens wird die Reflexion des Analyselichts durch eine Substratoberfläche bestimmt. Dabei wird vorzugsweise eine telezentrische Messoptik eingesetzt. In einer weiteren Ausführungsform des erfindungsgemäßen Verfahrens wird die Streuung des Analyselichts durch eine Substratoberfläche detektiert. Dabei wird vorzugsweise ein konfokales Farbmesssystem eingesetzt.

Die Reflexion oder Streuung der Analysestrahlung durch die Substratoberfläche in Abhängigkeit der Ortskoordinaten (x, y) und der Wellenlänge $\lambda$ kann auch mit einem Farbscanner öder einer Digitalkamera detektiert werden.

Die Detektion von radioaktiver oder akustischer Strahlung (Ultraschall) kann mit aus der medizinischen Diagnostik bekannten bildgebenden Verfahren erfolgen. Thermische Infrarotstrahlung kann mit einer Wärmebildkamera detektiert werden.

Um die durch den Umwelteinfluss induzierte Änderung in der Probe besser detektierbar zu machen, kann die Probe einer Nachbehandlung unterzogen werden. Eine Änderung in den hydrophilen oder hydrophoben Eigenschaften einer Probe kann beispielsweise dadurch besser detektierbar gemacht werden, dass die Probe mit Wasserdampf bedampft wird.

Aus den detektierten Intensitätswerten wird die Antwortfunktion A(x, y, λ) im Allgemeinen mit einem digitalen Bildauswertesystem bestimmt.

Besteht der Umwelteinfluss in der Einwirkung von Strahlung, welche eine Wellenlänge $\lambda_U$ aufweist, so ist das auf oder in der Probe erzeugte Intensitätsmuster im Allgemeinen auch eine Funktion der Wellenlänge der Strahlung. Die der orts- und wellenlängenabhängigen Intensitätsfunktion I(x, y, $\lambda_U$) zu Grunde liegende Musterfunktion M(x, y, $\lambda_U$) kann beispielsweise die orts- und wellenlängenabhängige Transmissionsfunktion T(x, y, $\lambda_U$) der zur Erzeugung des Intensitätsmusters verwendeten Maske sein.

In einer Ausführungsform des erfindungsgemäßen Verfahrens

(i) setzt man die Probe während einer Einwirkungszeit Δt einem Umwelteinfluss aus, wobei der Umwelteinfluss eine Strahlung ist und man den Umwelteinfluss mit einer bekannten orts- und wellenlängenabhängigen Intensitätsverteilung I(x, y, $\lambda_U$) (Intensitätsmuster), der eine Musterfunktion M(x, y, $\lambda_U$) zu Grunde liegt, auf die Probe einwirken lässt,

(ii) detektiert man anschließend die Transmission, Reflexion oder Streuung von Analysestrahlung durch die Probe in Abhängigkeit der Ortskoordinaten (x, y) der Probe und der Wellenlänge λ der Analysestrahlung und bestimmt so eine Antwortfunktion A(x, y, λ), welche die Intensität der transmittierten, reflektierten und/oder gestreuten Analysestrahlung in Abhängigkeit von den Ortskoordinaten (x, y) der Probe und der Wellenlänge λ der Analysestrahlung wiedergibt,

(iii) bestimmt man durch Korrelationsanalyse die Korrelation der bekannten orts- und wellenlängenabhängigen Intensitätsverteilung I(x, y, $\lambda_U$) des Umwelteinflusses oder der dieser Intensitätsverteilung zu Grunde liegenden Musterfunktion M(x, y, $\lambda_U$) mit der Antwortfunktion A(x, y, λ), wobei diese Korrelation ein Maß für die durch den Umwelteinfluss hervorgerufenen Änderung der physikalisch messbaren Eigenschaft der Probe ist.

In einem dritten Schritt (iii) wird durch Korrelationsanalyse die Korrelation der bekannten ortsabhängigen Intensitätsverteilung I(x, y) bzw. I(x, y, $\lambda_U$) des Umwelteinflusses oder der dieser zu Grunde liegenden Musterfunktion M(x, y) bzw. M(x, y, $\lambda_U$) mit der in Schritt (ii) bestimmten Antwortfunktion A(x, y, λ) bestimmt.

Die Korrelationsanalyse ist ein an sich bekanntes mathematisches Verfahren zur Erkennung von charakteristischen Mustern. Verfahren der Korrelationsanalyse sind in der Literatur ausführlich beschrieben worden. Es wird untersucht, inwieweit die (gemessene) Antwortfunktion der Probe mit einer Vergleichsfunktion korreliert.

Dazu wird eine verallgemeinerte Korrelationsfunktion berechnet:

$$K(\alpha,\beta,x_0,y_0,\lambda) = \int_{-\infty}^{\infty} \int_{-\infty}^{\infty} V(\alpha x + x_0, \beta y + y_0, \lambda) \cdot A(x,y,\lambda)\ dx\ dy$$

α, β sind frei wählbare Skalierungsparameter, $x_0$, $y_0$ sind frei wählbare Lageparameter. Die obige Gleichung ist so zu verstehen, dass die Integration über zwei Koordinaten, möglicherweise aber nur über eine Koordinate ausgeführt wird. Die Werte für V und A für Variablen, die den Messbereich überschreiten, werden gleich 0 gesetzt.

Die Korrelationsfunktion gibt Auskunft darüber, inwieweit die Antwortfunktion A(x, y, λ) mit einer Vergleichsfunktion V(αx + $x_0$, βy + $y_0$, λ) korreliert ist und wie stark sich diese Korrelation ändert, wenn deren Variablen geändert werden, das heißt wie signifikant die Korrelation ist.

Die Wahl der Vergleichsfunktion V(αx + $x_0$, βy + $y_0$, λ) richtet sich nach der zu untersuchenden Fragestellung. Die Vergleichsfunktion kann, muss aber nicht identisch mit der Intensitätsverteilung I(x, y, $\lambda_U$) oder der ihr zu Grunde liegenden Musterfunktion M(x, y, $\lambda_U$) oder auch dem Produkt aus Intensitätsverteilung I(x, y, $\lambda_U$) und Musterfunktion M(x, y, $\lambda_U$) sein. Die Vergleichsfunktion beschreibt allgemein die zu erwartende bzw. die gesuchte Eigenschaftsänderung der Probe bzw. der Substratoberfläche durch den Umwelteinfluss. Diese Eigenschaftsänderung weist aber erwartungsgemäß das charakteristische Muster der Intensitätsverteilung des Umwelteinflusses auf. Der Fachmann wird entsprechend der zu untersuchenden Fragestellung eine geeignete Vergleichsfunktion auswählen.

Soll beispielsweise die durch Bestrahlung mit Licht erfolgte Reflexionsänderung einer Oberfläche untersucht werden, ist die Vergleichsfunktion so zu wählen, dass ihre x-y-Abhängigkeit der bekannten x-y-Abhängigkeit der bekannten ortsabhängigen Intensitätsverteilung I(x, y, $\lambda_U$) bzw. der zu Grunde liegenden Musterfunktion M(x, y, $\lambda_U$) bzw. dem Produkt aus Intensitätsverteilung I(x, y, $\lambda_U$) und Musterfunktion M(x, y, $\lambda_U$) entspricht. Die Vergleichsfunktion muss keine explizite Wellenlängenabhängigkeit besitzen. Soll aber beispielsweise eine Farbänderung untersucht werden, so wird die Vergleichsfunktion eine Wellenlängenabhängigkeit aufweisen, die gegebenenfalls unter Berücksichtigung der menschlichen Wahrnehmung gewählt wird.

Die Korrelationsfunktion bildet nur die gewünschten, das heißt die durch den Umwelteinfluss hervorgerufene Veränderung der Probe ab und unterdrückt wirkungsvoll Störeinflüsse wie statistisches Rauschen, Probeninhomogenitäten und Einflüsse von Fremdlicht. Daraus resultiert eine sehr hohe Empfindlichkeit.

Eine bevorzugte Variante der allgemeinen Korrelationsanalyse ist die Fourieranalyse.

In einer Ausführungsform des erfindungsgemäßen Verfahrens ist die Intensitätsverteilung $I(x, y, \lambda_U)$ eine periodische Intensitätsverteilung mit einer Ortsfrequenz $\alpha$. Eine periodische Intensitätsverteilung kann erzeugt werden, indem eine Maske mit einer periodischen Transmissionsfunktion $T(x, y, \lambda_U) = M(x, y, \lambda_U)$ verwendet wird. Diese kann beispielsweise eine so genannte Barcode-Maske sein, beispielsweise eine transparente Folie mit einem Aufdruck von regelmäßig (äquidistant) angeordneten, (weitgehend) intransparenten Balken (sogenannte Schwarz/Weiss-Barcode-Maske), oder eine Schablone mit einer entsprechenden Abfolge von rechteckigen Aussparungen. An Stelle der Verwendung einer Maske kann auch ein optisches Gitter mit einer entsprechenden Musterfunktion $M(x, y, \lambda_U)$ auf die Probe projiziert werden.

Exemplarisch wird nachfolgend ein Verfahren der Korrelationsanalyse zur Bestimmung der Korrelation zwischen der ortsabhängigen Intensitätsverteilung $I(x, y, \lambda_U)$ und der Antwortfunktion $A(x, y, \lambda)$ beschrieben. Verfahren der Korrelationsanalyse sind an sich bekannt und in der Literatur ausführlich beschrieben worden. Die Erfindung besteht daher auch nicht in der Bereitstellung derartiger mathematischer Verfahren.

Hat die Transmissionsfunktion der Maske eine periodische Struktur, so ergeben sich besonders anschauliche Verhältnisse. Wählt man zum Beispiel die Transmissionsfunktion

$$T(x, y, \lambda_U) = \tfrac{1}{2}(1 + \cos(\alpha_0 x)),$$

und möchte anschließend die Lichtechtheit einer Probe bestimmen, so gilt, da $V(x, y, \lambda) = I(x, y, \lambda_U) = T(x, y, \lambda_U)$:

$$K(\alpha, \beta, x_0, y_0, \lambda) = \int_{-\infty}^{\infty} \frac{1}{2} \cdot \left(1 + \cos(\alpha\, x)\right) \cdot A(x, y)\, dx$$

Damit ist die Korrelationsfunktion bis auf eine Konstante die reelle Fouriertransformation der Antwortfunktion. $\alpha$ kann somit als Ortsfrequenz aufgefasst werden. Ferner zeigt $K(\alpha, \beta, x_0, y_0, \lambda)$ nur bei der Eigenfrequenz $\alpha_0$ der Maske einen Beitrag, der von der Bestrahlung hervorgerufen wird. Bei allen anderen Ortsfrequenzen $\alpha \neq \alpha_0$ verschwindet die Korrelationsfunktion. Somit erhält man ein unendlich hohes Ortsfrequenz-Auflösungsvermögen $\alpha_0/\Delta\alpha$.

In der Praxis ist jedoch zu berücksichtigen, dass aufgrund der endlichen Probengröße $x_{max}$ die Integration nicht von minus Unendlich bis plus Unendlich durchgeführt werden kann. Ferner wird nicht kontinuierlich gemessen, sondern die Antwortfunktion wird mit einer begrenzten Anzahl von Stützstellen digitalisiert. Aus der Dichte der Stützstellen resultiert eine obere Grenze für die noch messbare Ortsfrequenz. Demgegenüber resultiert aus der endlichen Probengröße ein endliches Ortsfrequenz-Auflösungsvermögen $\alpha_0/\Delta\alpha$, welches gegeben ist durch $\alpha_0/\Delta\alpha = \alpha_0 \cdot x_{max}$.

Dies bedeutet, dass Störungen, hervorgerufen durch statistische Prozesse (Signalrauschen), weniger wirkungsvoll unterdrückt werden als bei unendlich hohem Ortsfrequenz-Auflösungsvermögen. In der Praxis hat sich jedoch gezeigt, dass trotz dieser Einschränkungen das erfindungsgemäße Verfahren im Vergleich zur visuellen Inspektion eine mehr als hundertfach höhere Empfindlichkeit besitzt.

Die so ermittelte Korrelation ist ein quantitatives und von subjektiver Beurteilung unabhängiges Maß für die durch den Umwelteinfluss hervorgerufenen Änderung der physikalisch messbaren Eigenschaft der Probe.

Aus der Mustererkennung mittels Korrelationsanalyse resultiert eine sehr hohe Empfindlichkeit der Detektion der durch den Umwelteinfluss in der Probe bzw. auf der Substratoberfläche hervorgerufenen Änderungen. Diese Empfindlichkeit ist sehr viel höher als bei jedem Verfahren, das auf der visuellen Beurteilung von Proben (z. B. anhand von Vergleichsproben) beruht.

In einer Ausführungsform des erfindungsgemäßen Verfahrens werden die Intensitätswerte des gestreuten oder reflektierten Lichts über einen Wellenlängenbereich $\Delta\lambda$ summiert und für mehrere verschiedene Wellenlängenbereiche $\Delta\lambda_1, \Delta\lambda_2, \Delta\lambda_3, \ldots$ mehrere verschiedene Antwortfunktionen $A_1(x, y, \Delta\lambda_1), A_2(x, y, \Delta\lambda_2), A_3(x, y, \Delta\lambda_3), \ldots$ bestimmt und jeweils mit dem bekannten Intensitätsmuster $I(x, y)$ bzw. $I(x, y, \lambda_U)$ des Umwelteinflusses korreliert. So kann beispielsweise bestimmt werden, inwieweit der Umwelteinfluss sich auf eine bestimmte Eigenschaft der Probe beziehungsweise Substratoberfläche, welche sich in der Änderung der Absorptionseigenschaften der Probe beziehungsweise der Substratoberfläche bei einer bestimmten Wellenlänge oder in einem bestimmten Wellenlängenbereich niederschlägt, auswirkt, während er andere Eigenschaften, welche sich in den Absorptionseigenschaften der Probe beziehungsweise Substratoberfläche bei einer anderen Wellenlänge oder in einem anderen Wellenlängenbereich niederschlagen würden, unberührt lässt.

In einer Ausführungsform des erfindungsgemäßen Verfahrens wird jeweils eine Antwortfunktion für rotes, grünes und blaues Licht durch RGB-Analyse bestimmt. Dies geschieht dadurch, dass die Intensitätswerte des von der Substratoberfläche reflektierten oder gestreuten Lichts für den roten, grünen und blauen Wellenlängenbereich, also für den Wellenlängenbereich von beispielsweise 600 - 700 nm(rot), 500 - 600 nm (grün) und 400 - 500 nm (blau) summiert werden und eine entsprechende Antwortfunktion für jeden dieser Wellenlängenbereiche ermittelt wird. Anschließend kann jede dieser Antwortfunktionen mit dem Intensitätsmuster I(x, y) bzw. I(x, y, $\lambda_U$) des Umwelteinflusses oder den entsprechenden Musterfunktionen korreliert werden. Soll beispielsweise die Lichtechtheit von Farbmitteln untersucht werden, so kann auf diese Weise ermittelt werden, wie sich der Rot-, Grün- und Blau-Anteil des von der Farbmittel-Probe gestreuten Lichts nach Bestrahlung (beispielsweise mit Sonnenlicht) ändert und wie sich dadurch der Farbeindruck des Farbmittels ändert.

Beispielsweise kann eine Substratoberfläche durch eine Gitterfolie bestrahlt werden. Nach Bestrahlung wird die Gitterfolien entfernt und die Substratoberfläche mit einem Scanner eingescannt. Die R-, G-, B-Signale der bestrahlten Substratoberfläche werden anschließend nach dem im Folgenden beschriebenen Verfahren einer eindimensionalen Fouriertransformation unterworfen. Die vom Scanner gemessenen Intensitäten seien mit $S_j(k, m)$ bezeichnet. Hierbei bezeichnet der Index j die R-, G-, B-Farben (rot, grün und blau). Demgegenüber indizieren die Größen k und m den Ort, an dem die Intensität gemessen wurde. Die von k bzw. m indizierte Richtung wird im Folgenden als Bildzeile bzw. als Bildspalte bezeichnet. Mit Hilfe der mathematischen Operation

$$P_j(k',m) = \sqrt{\left[ \int_{alle\,k} S_j(k,m) \cdot \sin(2 \cdot \pi \cdot k' \cdot k) \cdot dk \right]^2 + \left[ \int_{alle\,k} S_j(k,m) \cdot \cos(2 \cdot \pi \cdot k' \cdot k) \cdot dk \right]^2}$$

wird für jede Bildzeile das Powerspektrum $P_j(k', m)$ berechnet.

Die so für jede Bildzeile erhaltenen Powerspektren werden über alle Bildspalten gemittelt.

$$\overline{P_j(k')} = \frac{\sum_{alle\,Bildzeilen} P_j(k',m)}{Anzahl\ der\ Bildzeilen}$$

Anschließend wird das gemittelte Powerspektrum $\overline{P_j(k')}$ über die Ortsfrequenz k' aufgetragen. Photochemisch induzierte Veränderungen in der Farbe der Substratoberfläche sind in den Kanälen R, G, B dadurch eindeutig zu erkennen, dass bei der durch das Foliengitter festgelegten Ortsfrequenz eine deutlich höhere Intensität des gemittelten Powerspektrums festzustellen ist. Die Höhe dieser Intensität in den einzelnen Kanälen R, G, B ist ein Maß für die photochemisch erzeugte Farbänderung.

Zur eingehenderen Untersuchung der Probe wird das Ergebnis der beschriebenen mathematischen Operation genauer betrachtet. Neben dem Powerspektrum wird nun auch das Vorzeichen von

$$V_j(k',m) = \int_{alle\,k} S_j(k,m) \cdot \cos(2 \cdot \pi \cdot k' \cdot k) \cdot dk$$

berücksichtigt. Zur Rauschunterdrückung wird hierbei auch eine Mittlung über alle gemessenen Bildzeilen

$$V_j(k') = \frac{\sum\limits_{\text{alle Bildzeilen}} V_j(k',m))}{\text{Anzahl der Bildzeilen}}$$

vorgenommen. $V_j(k')$ gibt Auskunft darüber, ob der Umwelteinfluss zu einer Zunahme ($V_j(k') > 0$) oder zu einer Abnahme ($V_j(k') < 0$) des vom Scanner gemessenen Signals geführt hat.

Substratoberflächen, die mit dem vorliegenden Verfahren untersucht werden können, sind die Oberflächen beliebiger Materialien, beispielsweise die Oberflächen von Kunststoffen, Holz, Lack und Papier.

Es können Änderungen von Eigenschaften der Substratmaterialien selbst, beispielsweise von Kunststoffen untersucht werden, oder Änderungen von Eigenschaften von Stoffen, die in die Substratmaterialien eingebracht oder auf diese aufgetragen worden sind, beispielsweise von Farbmitteln, UV-Absorbern, Stabilisatoren, kosmetischen Formulierungen.

Ein Aspekt der vorliegenden Erfindung ist die Verwendung des erfindungsgemäßen Verfahrens zur Untersuchung der thermisch oder lichtinduzierten Alterung von Kunststoffen durch ortsaufgelöste Detektion der CO-Bande bei 5,8 $\mu$m. Hierzu wird, wie unter anderem in DIN 53383 beschrieben, das Verhältnis der Extinktion bei 5,8 $\mu$m zu einer bestimmten Referenzextinktion, die für den Kunststoff Polyethylen beispielsweise bei 4,95 $\mu$m (entsprechend 2020 cm$^{-1}$) liegt, gebildet.

Ebenso kann die thermisch oder lichtinduzierte (photooxidative) Alterung beliebiger weiterer Stoffe untersucht werden. Ein weiterer Aspekt der Erfindung ist daher allgemein die Verwendung des erfindungsgemäßen Verfahrens zur Untersuchung der lichtinduzierten oder photooxidativen Alterung von Stoffen. Zu untersuchende Stoffe sind beispielsweise mit Farbmitteln gefärbte oder ungefärbte Kunststoffe, Lacke, Metalle, Textilien, Papiere, Holzartikel oder Baustoffe.

Die Detektion der lichtinduzierten Alterung erfolgt über geeignete spektroskopische Banden des betreffenden Stoffes. Diese kann im IR- oder UV-VIS-Bereich des Spektrums liegen.

Ein Aspekt der vorliegenden Erfindung ist auch die Verwendung des erfindungsgemäßen Verfahrens zur Bestimmung der Lichtechtheit von Farbmitteln. Farbmittel können Farbstoffe oder Pigmente sein. Dabei kann so vorgegangen werden, dass eine Substratoberfläche, welche das Farbmittel enthält, mit vorzugsweise Sonnenlicht oder Licht aus einem Sonnensimulator durch eine Maske bestrahlt wird. Die Maske hat vorzugsweise eine regelmäßige Transmissionsfunktion mit einer Ortsfrequenz und ist besonders bevorzugt eine Schwarz-Weiss-Barcode-Maske mit einer eindimensionalen Ortsfrequenz $\alpha$. Die Maske kann auf die Substratoberfläche aufgelegt oder vor der Lichtquelle angebracht und mittels einer geeigneten Optik auf die Substratoberfläche projiziert werden. Es ist aber auch möglich, ein Intensitätsmuster als Beugungsmuster auf der Substratoberfläche zu erzeugen. Geeignete Sonnensimulatoren und Lichtquellen, welche ein dem Sonnenlicht entsprechendes Emissionsspektrum aufweisen, sind dem Fachmann bekannt und umfassen beispielsweise eine Xenon-Lampe. Die Probe kann auch in Freilandversuchen mit Sonnenlicht direkt oder indirekt mittels eines Systems von Spiegeln durch eine geeignete witterungsbeständige Metallmaske bestrahlt werden. Die Bestrahlungsintensität beträgt für UV-Licht im Wellenlängenbereich bis 400 nm beispielsweise von 20 bis 2000 W/m$^2$ und für Licht im sichtbaren Spektralbereich von 400 bis 800 nm von 500 bis 5000 W/m$^2$, insbesondere beträgt sie für UV-Licht ca. 50 W/m$^2$ und entspricht damit der Strahlungsintensität von natürlichem Sonnenlicht. Die Bestrahlungsdauer (Einwirkungszeit $\Delta t$) kann von einigen Sekunden bis zu mehreren Jahren betragen. Für sehr lichtechte bzw. witterungsbeständige Proben beträgt sie im Allgemeinen eine Woche bis einige Monate. Das erfindungsgemäße Verfahren zur Bestimmung der Lichtechtheit von Farbmitteln zeichnet sich dadurch aus, dass schon eine verhältnismäßig kurze Bestrahlungsdauer bei natürlicher Strahlungsintensität ausreichend ist, um die Farbänderung der Probe quantitativ detektierbar zu machen. Nach Bestrahlung wird (gegebenenfalls) die Maske entfernt und die Substratoberfläche mit einem Scanner eingescannt oder mit einer Digitalkamera aufgenommen. Anschließend wird mit einer Bildauswerteelektronik vorzugsweise eine RGB-Analyse durchgeführt und werden die Antwortfunktionen für rotes, grünes und blaues Licht bestimmt. Diese werden schließlich mit dem bekannten Intensitätsmuster der Bestrahlung korreliert, wobei als Korrelationsanalyse vorzugsweise eine Fourieranalyse durchgeführt wird. Der Peak der Korrelationsfunktion für rotes, grünes bzw. blaues Licht bei der Ortsfrequenz der Maske (bzw. der Ortsfrequenz der Intensitätsverteilung $I(x, y, \lambda_U)$) entspricht *quantitativ* der Änderung des roten, grünen bzw. blauen Farbanteils in dem von der Substratoberfläche gestreuten Licht, die auf die Bestrahlung zurückzuführen ist.

Ein weiterer Aspekt der Erfindung ist die Verwendung des erfindungsgemäßen Verfahrens zur Bestimmung der Änderung des Glanzverhaltens einer Substratoberfläche. Zu untersuchende Substratoberflächen sind beispielsweise Lackoberflächen, vorzugsweise die von Autolacken. Beispielsweise kann untersucht werden, inwieweit der Umwelteinfluss zu einer mechanischen Schädigung der Substratoberfläche, welche sich in einer Änderung des Glanzverhaltens der Substratoberfläche niederschlägt, führt. Beispielsweise können sich in einer Lackschicht Risse oder Hohlräume bilden. Zur Detektion solcher Veränderungen wird die Reflexion von Analyselicht mit Hilfe einer telezentrischen Beleuchtungs- und Detektionsoptik gemessen. Durch die Verwendung einer telezentrischen Messanordnung wird sichergestellt, dass die Probe mit parallelem Analyselicht beleuchtet wird und nur paralleles Licht detektiert wird. Dadurch werden ausschließlich Änderungen im Glanzverhalten der Probe detektiert und mögliche Veränderungen in der Farbe der Probe werden unterdrückt.

Ein weiterer Aspekt des erfindungsgemäßen Verfahrens, der, sofern er in bestimmten Staaten vom Patentschutz ausgeschlossen ist, in diesen Staaten nicht als Erfindung beansprucht werden soll, ist die Diagnose von allergischen Hautirritationen der menschlichen oder tierischen Haut, welche durch Umwelteinflüsse hervorgerufen wird, beispielsweise durch kosmetische Formulierungen oder allgemein durch allergene Stoffe. Durch das erfindungsgemäße Verfahren ist eine Früherkennung der allergischen Hautirritation möglich, noch lange bevor die Hautirritation mit dem Auge wahrnehmbar ist.

Ein weiterer Aspekt des erfindungsgemäßen Verfahrens ist die Untersuchung der Wirksamkeit von im Ackerbau eingesetzten Landwirtschaftschemikalien wie Düngemitteln, Fungiziden, Herbiziden und Insektiziden. Die Substratoberfläche ist hier ein Teil der Erdoberfläche, der mit Nutzpflanzen bebaut ist, der Umwelteinfluss ist das Einbringen der Chemikalien in den Boden bzw. das Aufbringen der Chemikalien auf die Nutzpflanzen. Das Ein- bzw. Aufbringen der Landwirischaftschemikalien folgt einem bestimmten Muster, welches durch eine Musterfunktion M(x, y) beschrieben wird. Von dem (ggf. in regelmäßigen Abständen) so behandelten Feld wird ein Luftbild aufgenommen, welches digital verarbeitet und, gegebenenfalls nach einer RGB-Analyse, zwecks Mustererkennung einer Korrelationsanalyse unterworfen wird.

Weitere Aspekte der Erfindung sind die Verwendung des erfindungsgemäßen Verfahrens zur Untersuchung der Witterungsbeständigkeit von Stoffen, der Chemikalienbeständigkeit von Stoffen oder der Abriebsfestigkeit von Beschichtungen.

Beispielsweise kann das erfindungsgemäße Verfahren in Verbindung mit den in den einschlägigen Normen für die Bewitterung mit künstlichem Tageslicht oder für die direkte Bewitterung beschriebenen Methoden eingesetzt werden. Einschlägige Normen sind beispielsweise ISO 4892 (1994) für Kunststoffe, ISO 11341 (1994) für Lacke und Anstrichstoffe, ISO 11507 (1997) für Beschichtungen in Geräten, ISO 3917 (1999) für Straßenfahrzeuge-Sicherheitsscheiben, ISO 11431 (2002) für Hochbau-Fugendichtstoffe, ISO 105-B02 (1994) für Textilien-Farbechtheitsprüfungen und ISO 105-B04 (1994) für Textilien-Farbechtheit-Bewitterung sowie ASTM G7, ISO 877, ISO 2810, ASTM D4141C (Black Box) und ASTM G24 (Unter Glas Belichtung) für direkte Bewitterung.

So können Metallgitter im Sinne der vorliegenden Erfindung als Schablone ohne weiteres unter anderem in den nachstehenden Bewitterungs- bzw. Belichtungsgeräten und Boxen vorteilhaft eingesetzt werden:

- in allen kommerziell bereits erhältlichen Geräten für künstliche Belichtung bzw. Bewitterung (siehe Beispiele);

- bei der Freilandbewitterung beispielsweise in "Black Boxes" (z.B. der Fa ATLAS);

- in Belichtungskammern für Unter-Glas-Belichtung (z.B. der Fa ATLAS);

- in Bewitterungsvorrichtungen mit automatischer Nachführung für Sonnengang, z.B. IP/DP-Box der Fa ATLAS in Arizona und Florida;

- in Bewitterungsanlagen mit beschleunigter Beregnung und Sonnenbelichtung durch geeignete Spiegelsysteme (z.B. EMMA/EMMAQUA der Fa. ATLAS).

Die Erfindung wird durch die nachstehenden Beispiele näher erläutert.

**Beispiele**

Es wurden Bestrahlungsexperimente wie folgt durchgeführt:
Die Probenfläche betrug, falls nicht anders vermerkt, 8 x 8 cm.
Eine Gitterfolie aus AGFA-Film (Typ 3ZESP) welche eine Gitterstruktur mit einer Periodenlänge von 1 mm aufwies, wurde auf die Probe gelegt und mit TESA-Film fixiert. Die zu bestrahlenden Proben wurden zusammen mit der Gitterfolie auf festem Karton fixiert. Der Stapel aus Folie, Probe und Karton wurde zusätzlich mit einer 3 mm dicken Quarzglasscheibe beschwert.
Bis auf die Fichtenholzprobe (Beispiel 1) wurden alle Probenstapel unter Outdoor-Bedingungen in einem kommerziellen Suntester der Fa. ATLAS (SUNTEST XLS Plus) belichtet.
Nach der Bestrahlung wurden die Gitterfolien entfernt. Die belichteten Proben wurden mit der belichteten Seite nach unten auf die Objektscheibe eines Scanners (HP SCAN-JET 550 C) gelegt und unter folgenden Bedingungen eingescannt:

True Colour (16.7 Mio Farben)
Auflösung: 1200 dpi
Kontrast: mittel
Farbe: automatisch
Belichtung: automatisch

Die Gitterfolie wurde ebenfalls eingescannt.

Die R-, G-, B-Signale der bestrahlten Probenflächen wurden anschließend nach dem im Folgenden beschriebenen Verfahren einer eindimensionalen Fouriertransformation unterworfen. Die vom Scanner gemessenen Intensitäten seien mit $S_j(k, m)$ bezeichnet. Hierbei bezeichnet der Index j die R-, G-, B-Farben (rot, grün und blau). Demgegenüber indizieren die Größen k und m den Ort, an dem die Intensität gemessen wurde. Die von k bzw. m indizierte Richtung wird im Folgenden als Bildzeile bzw. als Bildspalte bezeichnet. Mit Hilfe der mathematischen Operation

$$P_j(k',m) = \sqrt{\left[\int_{alle\,k} S_j(k,m) \cdot \sin(2 \cdot \pi \cdot k' \cdot k) \cdot dk\right]^2 + \left[\int_{alle\,k} S_j(k,m) \cdot \cos(2 \cdot \pi \cdot k' \cdot k) \cdot dk\right]^2}$$

wurde für jede Bildzeile das Powerspektrum $P_j(k', m)$ berechnet.

Die so für jede Bildzeile erhaltenen Powerspektren wurden über alle Bildspalten gemittelt.

$$\overline{P_j(k')} = \frac{\sum_{alle\,Bildzeilen} P_j(k',m)}{Anzahl\ der\ Bildzeilen}$$

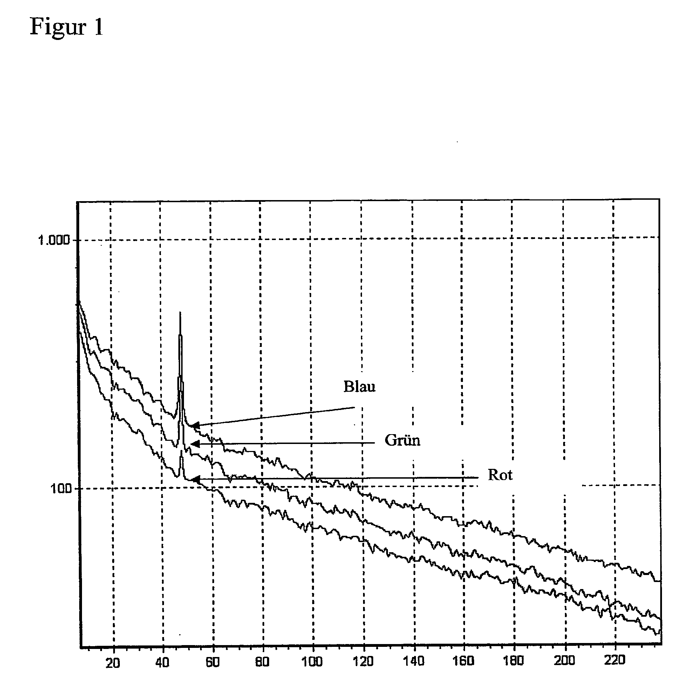

In den Figuren 1, 2, 4 und 6 ist jeweils das gemittelte Powerspektrum $P_j(k')$ über die Ortsfrequenz k' aufgetragen. Photochemisch induzierte Farbänderungen sind in den Kanälen R, G, B dadurch eindeutig zu erkennen, dass bei der durch das Foliengitter festgelegten Ortsfrequenz eine deutlich erhöhte Intensität des gemittelten Powerspektrums festzustellen ist. Die Höhe dieser Intensität in den einzelnen Kanälen ist ein Maß für die photochemisch erzeugte Farbänderung. Die in den Figuren auf der x-Achse bzw. y-Achse aufgetragenen Größen sind proportional der Ortsfrequenz bzw. der Intensität des gemittelten Powerspektrums.

Beispiel 1

Eine 15 x 10 cm große helle Fichtenholztafel wurde 15 Minuten unter Outdoor-Bedingungen durch die Gitterfolie mit der Ortsfrequenz 1/mm mit Sonnenlicht bestrahlt.

Nach der Belichtung wurde das Foliengitter abgenommen und die Holzoberfläche visuell begutachtet. Mit dem Auge konnte keine Veränderung der Probenoberfläche festgestellt werden. Insbesondere war kein Gittermuster mit dem Auge wahrnehmbar.

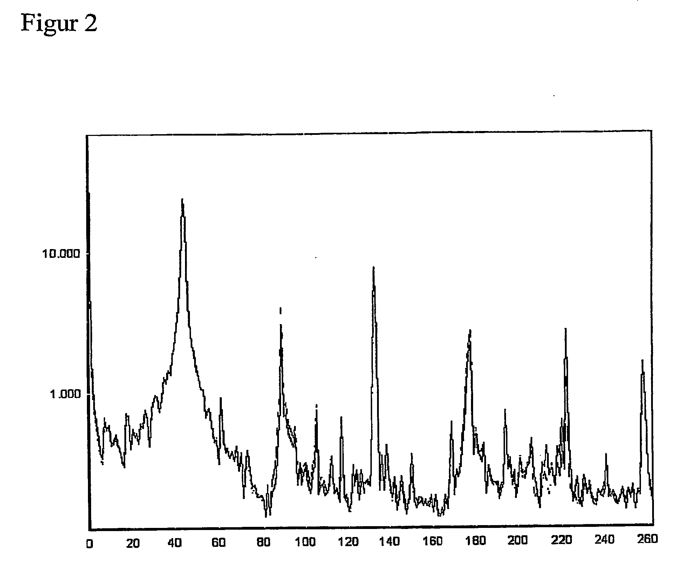

Das Ergebnis der eindimensionalen Fouriertransformation ist für die belichtete Fichtenholztafel in Figur 1 und für die Gitterfolie in Figur 2 dargestellt.

Bei der aus Figur 2 erkennbaren Ortsfrequenz des Gitters von 43 kann man in Figur 1 im Blaukanal einen sehr hohen, im Grünkanal einen mittleren und im Rotkanal einen relativ kleinen Fourier-Signalpeak feststellen. Dies entspricht einer Verbräunlichung der Holzoberfläche, die aber weit unterhalb der Sichtbarkeitsgrenze liegt.

Die Signalhöhen sind logarithmisch aufgetragen, um kleine Effekte wie Rauschen etc. besser sichtbar zu machen. Die erhaltenen Fourier-Signalpeaks sind daher absolut sehr hoch.

Beispiel 2

a) Konventionelle Belichtung (Vergleich)

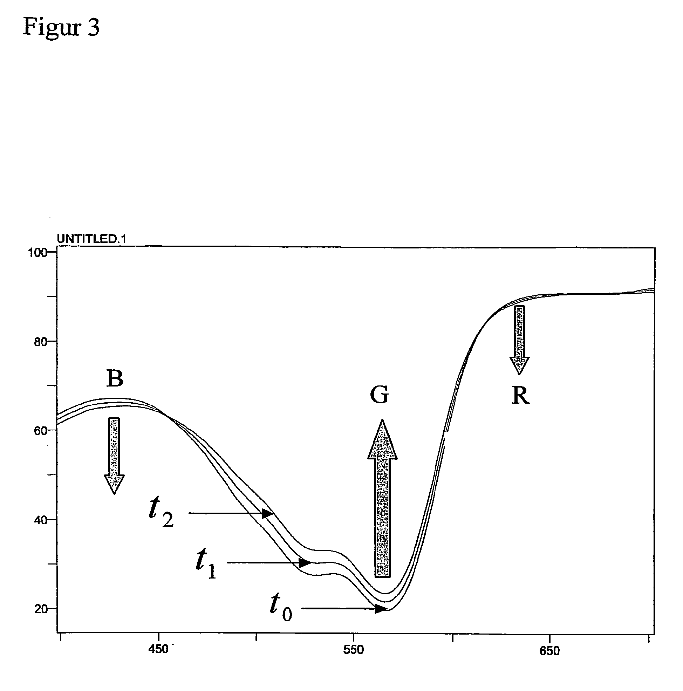

Mit Hilfe eines Ink-Jet-Druckers vom Typ HP 2000 C wurde ein flächendeckender Magentadruck auf eine Overhead-Folie gedruckt. Dieser Druck wurde unter Outdoor-Bedingungen im Suntester XLS Plus der Fa ATLAS einen Tag lang bestrahlt. Vor Beginn der Bestrahlung (Zeitpunkt $t_0$) sowie nach einer Bestrahlungszeit von 8 Stunden (Zeitpunkt $t_1$) bzw. von 24 Stunden (Zeitpunkt $t_2$) wurde die Folie transmissionsspektroskopisch untersucht. Die Ergebnisse sind in Abbildung 3 dargestellt. Dabei ist die Transmission in % (y-Achse) über die Wellenlänge in nm (x-Achse) aufgetragen.

Wie man den Transmissionsspektren bei den Zeitpunkten $t_0$, $t_1$ bzw. $t_2$ entnehmen kann, nimmt die Transmission im grünen Spektralbereich im Verlauf der Bestrahlung deutlich zu. Demgegenüber beobachtet man im blauen und roten Spektralbereich eine (geringere) Abnahme der Transmission.

Insgesamt ergibt sich eine auch mit dem Auge wahrnehmbare Aufhellung, welche typischerweise koloristisch ausgewertet wird.

b) Gitterbelichtung (erfindungsgemäß)

Eine mit der in a) verwendeten Folie identische Magentafolie wurde durch die oben beschriebene Gitterfolie mit künstlichem Sonnenlicht bestrahlt. Die Belichtungszeit betrug nur 10 Minuten!

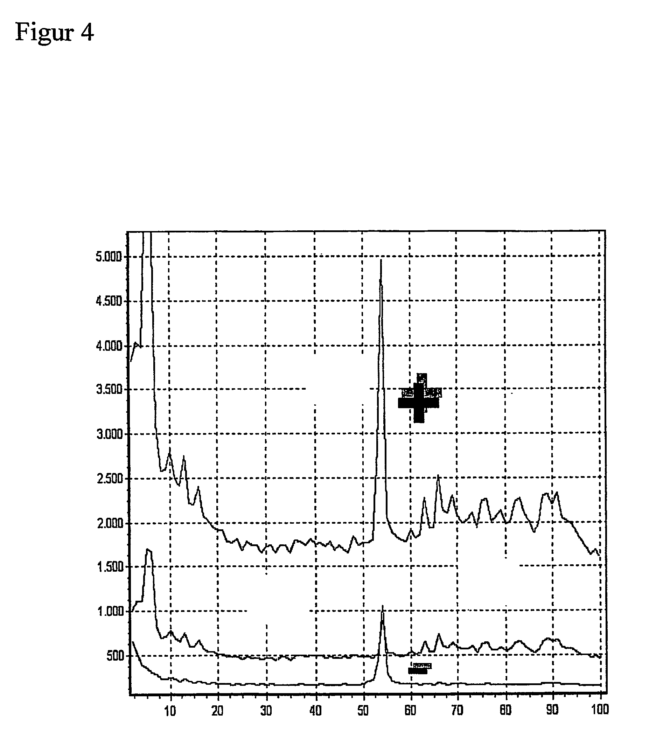

Das Ergebnis der eindimensionalen Fourieranalyse des eingescannten Bildes der belichteten Folie ist in Figur 4 dargestellt.

Man beobachtet im Grünkanal (obere Kurve) einen großen, im Blaukanal (untere Kurve) einen kleinen und im Rotkanal (mittlere Kurve) einen noch kleineren Signalpeak bei der Ortsfrequenz der Gitterfolie.

Aus einem Vergleich der Experimente aus 2a und 2b lässt sich einen zeitlichen Beschleunigungsfaktor von ca. 100 im vorliegenden Beispiel abschätzen, welcher durch das erfindungsgemäße Verfahren erzielt wird.

Beispiel 3

a) konventionelle Belichtung (Vergleich)

Ein Prüflack der BASF AG, Ludwigshafen, DE mit einer Aufhellung von P.R. 178 wurde wie oben beschrieben 600 Stunden unter Outdoor-Bedingungen konventionell belichtet.

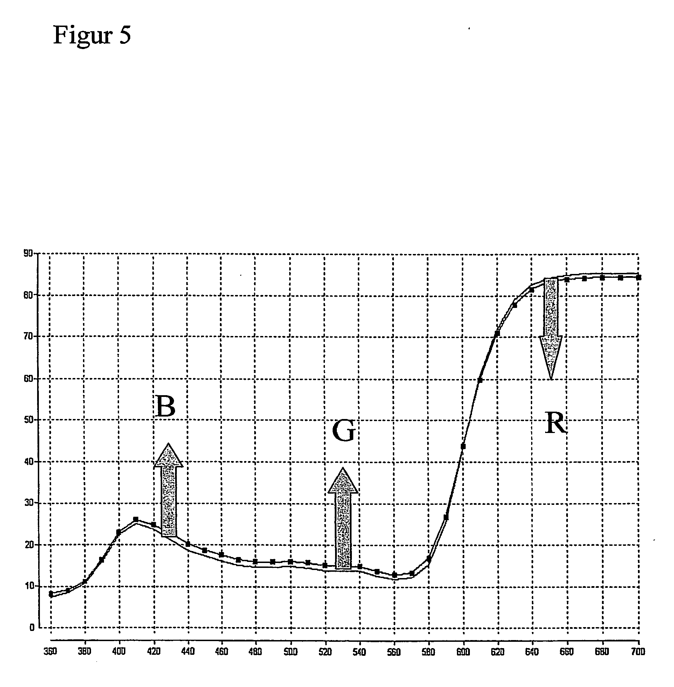

Vor und nach der Belichtung wurde die Lackprobe reflektionsspektroskopisch charakterisiert. Die Ergebnisse sind in Figur 5 wiedergegeben. Die gepunktete Linie entspricht der belichteten, die einfache Line der unbelichteten Probe. Dabei ist die Reflektivität in % (y-Achse) über die Wellenlänge (x-Achse) aufgetragen.

Wie man aus Figur 5 erkennen kann, nimmt nach der Bestrahlung die Reflektivität der Lackprobe im blauen und grünen Spektralbereich um wenige Prozent zu und im roten Spektralbereich um wenige Prozent ab. Dies führt zu einer mit dem Auge schwach erkennbaren leichten Abtrübung und gleichzeitigen Aufhellung der Lackprobe.

b) Gitterbelichtung (erfindungsgemäß)

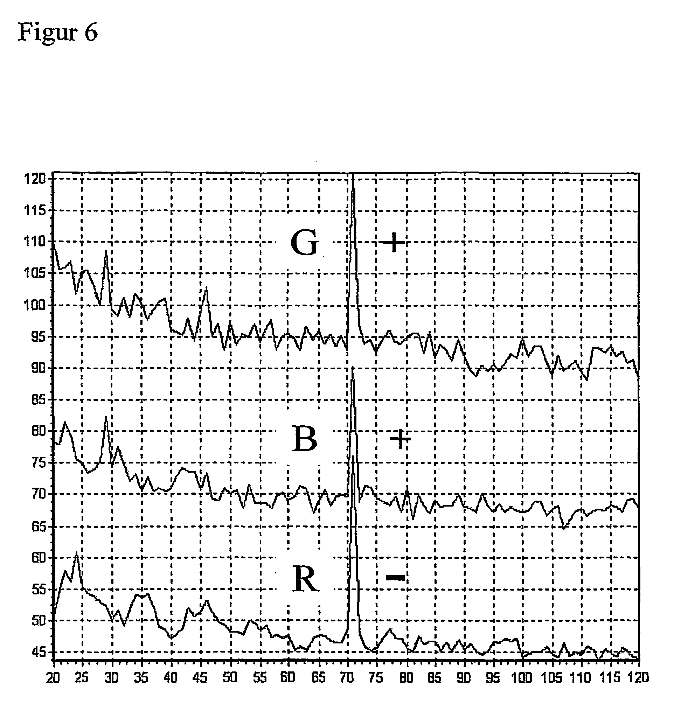

Die Lackprobe wurde durch die oben beschriebene Gitterfolie unter Outdoor-Bedingungen bestrahlt. Die Bestrahlungszeit betrug nur 92 Stunden. Figur 6 gibt das Ergebnis der eindimensionalen Fourieranalyse des eingescannten Bildes der bestrahlen Lackprobe wieder.

Bei der Ortsfrequenz der Gitterfolie von 71 erkennt man in allen drei Farbkanälen annähernd gleich hohe Signalpeaks, die ca. fünfmal höher sind als der Rauschpegel. Diese geben die Änderung der Reflektivität im roten, grünen und blauen Spektralbereich wieder. Das sehr deutliche Messsignal wird bereits nach nur 92 Stunden Belichtungszeit erzeugt.

Beispiel 4

Ein Prüflack der BASF AG, Ludwigshafen, DE mit einer Aufhellung von P.R. 122 wurde in einem kommerziellen Bewitterungsgerät (W.O.M Cl 35A der Firma ATLAS) einer Bewitterung nach der Prüfmethode SAE 1960, CAM 180 unterworfen. Das Bewitterungsmuster wurde mit Hilfe eines Metallgitters mit einer Fläche von 5 cm x 7 cm, welches im Abstand von 3 mm Streben mit einer Breite von 3 mm (entsprechend einer Ortsfrequenz von 0,166/mm) aufweist, erzeugt. Das Gitter war mittels einer geeigneten Haltevorrichtung 3 mm vor der Probenoberfläche positioniert.

Nach bestimmten Zeitintervallen wurde die Haltevorrichtung mit der Probe aus dem Bewitterungsgerät herausgenommen. Das Metallgitter vor der Probenoberfläche wurde entfernt und die Probenoberfläche, wie oben allgemein beschrieben, eingescannt und mittels RGB-Analyse und eindimensionaler FT-Transformation ausgewertet. Es wurde nach jedem Zeitintervall die Höhe der FT-Signalpeaks für die Kanäle R, G, und B bestimmt. Schließlich wurde das Metallgitter wieder in der gleichen Postion in die Halterung eingesetzt und die Bewitterung fortgesetzt.

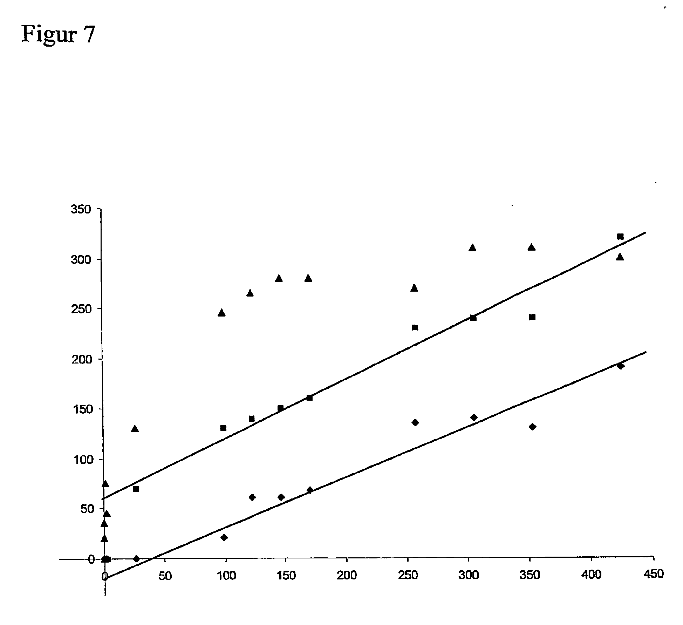

In Figur 7 ist die Höhe der FT-Signalpeaks für die Kanäle R (Dreiecke), G (Rauten) und B (Quadrate) gegen die Bewitterungszeit aufgetragen. Wie der Figur zu entnehmen ist, kann im Blau- und im Grünkanal ein annähernd lineares Anwachsen der FT-Signalpeaks mit der Zeit beobachtet werden. Dagegen beobachtet man im Rotkanal sehr schnell einen steilen Anstieg des FT-Signalpeaks, der aber nach ca. 300 Bewitterungsstunden annähernd konstant bleibt.

Dadurch eignet sich die Gitterbewitterung hervorragend sowohl zur Charakterisierung von spezifischen Produkteigenschaften als auch zur Vorhersage von Farbveränderungen bei längeren Bestrahlungszeiten durch Extrapolation der Signalhöhen in den einzelnen Farbkanälen. Es konnte außerdem ermittelt werden, dass die FT-Signalpeaks im roten und blauen Kanal ein negatives Vorzeichen haben, was eine Abnahme der Reflektivität für rote und blaue Analysestrahlung durch absorbierende Photoprodukte anzeigt, während der FT-Signalpeak im grünen Spektralbereich ein positives Vorzeichen hat, was eine Zunahme der Reflektivität für grünes Analyselicht durch photochemischen Abbau von P.R. 122 anzeigt.

Visuell ist auch nach 420 Sunden Bewitterungszeit keine Farbänderung der Lackprobe zu erkennen. Damit im Falle des hochwitterungsstabilen Pigments P.R.122 eine Farbtonänderung mit dem Auge deutlich wahrnehmbar wird, ist eine Bewitterungszeit von mindestens 1000 Bewitterungsstunden erforderlich.

Beispiel 5

Zur Früherkennung von durch Sandpartikel hervorgehobenen Lackschäden wurde folgendes Experiment durchgeführt:

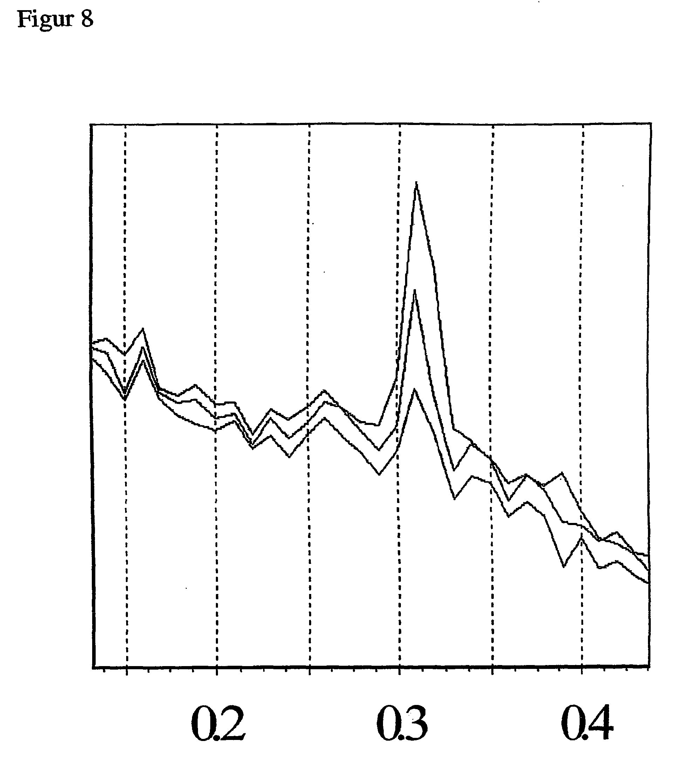

Vor einer 8 x 8cm großen Lackprobe (hellgraue Metallic-Lackierung der BASF) wurde ein Metallgitter angebracht. Die Ortsfrequenz des Gitters betrug 0,32/mm. Anschließend wurde die Probe mit einem Sandstrahlgebläse aus einem Abstand von 1 m 30 Sekunden lang durch das Gitter behandelt. Anschließend wurde das Gitter entfernt. Die visuelle Inspektion der Probe zeigte keine Veränderungen. Die Probe wurde mit einem Scanner (Typ AsticScan 1800 f der Firma Microtek) eingescannt. Figur 8 gibt das Ergebnis der eindimensionalen Fourieranalyse des eingescannten Bildes der behandelten Lackprobe wieder. Die obere Kurve repräsentiert den Blaukanal, die mittlere Kurve den Rotkanal und die untere Kurve den Grünkanal. Das Signalpeak des Fouriersignals bei der Ortsfrequenz von 0,32/mm ist deutlich zu erkennen. Die Höhe des Signalpeaks gibt das Ausmaß der Schädigung der Lackprobe durch die Sandstrahl-Exposition wieder. Das Verfahren ist durch eine hohe Empfindlichkeit gekennzeichnet. Selbst eine fünfminütige Exposition führte nicht zu einer mit bloßem Auge erkennbaren Veränderung der Lackprobe.

Beispiel 6:

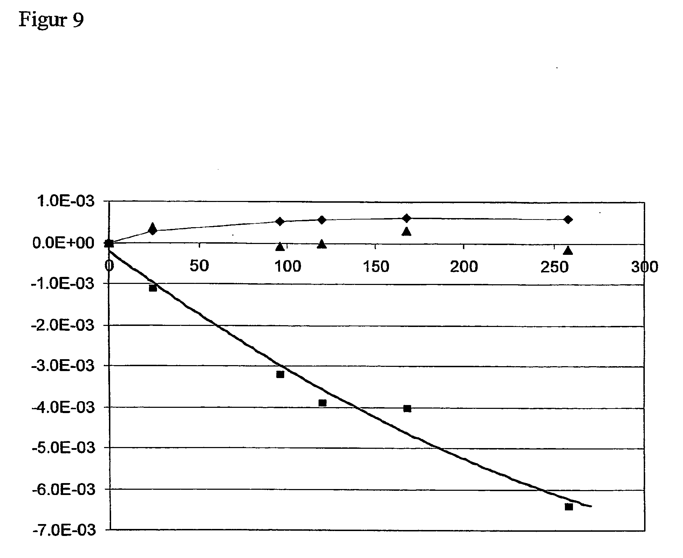

Man verfährt wie in Beispiel 4 und verwendet eine Aufhellung des Pigmentes P.B. 15:3. Außerdem wird das Matallgitter mit Teflon beschichtet und ohne Abstand direkt auf die Probenoberfläche aufgelegt. Die Ortskoordinaten des Gitters werden zu einer Phasenbestimmung der Fouriersignale herangezogen. Man erhält das in Figur 9 gezeigte Ergebnis.

Dabei ist auf der Ordinate die Änderung der Reflektivität der Probe (Vierecke: Blaukanal; Dreiecke: Grünkanal; Rauten: Rotkanal) und auf der Abszisse die Bewitterungszeit in Stunden aufgetragen. Man beobachtet im Blaukanal eine kontinuierliche Abnahme der Refleküvität infolge der Bewitterung. Nach 250 Bewitterunsstunden hat die Reflektivität um ca 6 Promille abgenommen. Dies ist auf den Aufbau von Photoprodukten zurückzuführen, welche im blauen Spektralbereich absorbieren. Im Rotkanal beobachtet man eine sehr schwach zunehmende Reflektivität. Dies ist auf Zersetzung des im roten Spektralbereich absorbierenden Pigmentes zurückzuführen. Alle diese Effekte sind weit unter der Sichtbarkeitsgrenze des menschlichen Auges zu beobachten und unterstreichen die hohe Empfindlichkeit der erfindungsgemäßen Methode.

**Patentansprüche**

1. Verfahren zur Detektion der durch einen Umwelteinfluss hervorgerufenen Änderung einer physikalisch messbaren Eigenschaft einer Probe, bei dem man

   (i) die Probe während einer Einwirkungszeit $\Delta t$ dem Umwelteinfluss aussetzt, wobei man den Umwelteinfluss mit einer bekannten ortsabhängigen Intensitätsverteilung $I(x, y)$, der eine Musterfunktion $M(x, y)$ zu Grunde liegt, auf die Probe einwirken lässt, wobei die Einwirkung des Umwelteinflusses auf die Probe nicht homogen ist,
   (ii) anschließend die Transmission, Reflektion oder Streuung von Analysestrahlung durch die Probe in Abhängigkeit der Ortskoordinaten $(x, y)$ der Probe und der Wellenlänge $\lambda$ der Analysestrahlung detektiert und so eine Antwortfunktion $A(x, y, \lambda)$ bestimmt, welche die Intensität der transmittierten, reflektierten oder gestreuten Analysestrahlung in Abhängigkeit von den Ortskoordinaten $(x, y)$ der Probe und der Wellenlänge $\lambda$ wiedergibt,
   (iii) durch Korrelationsanalyse die Korrelation der bekannten ortsabhängigen Intensitätsverteilung $I(x, y)$ des Umwelteinflusses oder der dieser zu Grunde liegenden Musterfunktion $M(x, y)$ mit der Antwortfunktion $A(x, y, \lambda)$ bestimmt, wobei diese Korrelation ein Maß für die durch den Umwelteinfluss hervorgerufenen Änderung der physikalisch messbaren Eigenschaft der Probe ist.

2.  Verfahren nach Anspruch 1, **dadurch gekennzeichnet, dass** man den Umwelteinfluss durch eine Maske, welche eine bestimmte ortsabhängige Transmissionsfunktion T(x,y) aufweist, auf die Substratoberfläche einwirken lässt, und so die ortsabhängige Intensitätsverteilung I(x,y) als Abbild der Maske auf der Substratoberfläche erzeugt.

3.  Verfahren nach Anspruch 1 oder 2, **dadurch gekennzeichnet, dass** der Umwelteinfluss in der Einwirkung von Strahlung besteht und die Intensitätsverteilung eine orts- und wellenlängenabhängige Intensitätsverteilung I(x, y, $\lambda_U$) ist.

4.  Verfahren nach einem der Ansprüche 1 bis 3, **dadurch gekennzeichnet, dass** der Umwelteinfluss die Einwirkung von Licht umfasst.

5.  Verfahren nach Anspruch 1 oder 2, **dadurch gekennzeichnet, dass** der Umwelteinfluss die Einwirkung mechanischer Kräfte umfasst.

6.  Verfahren nach Anspruch 1 oder 2, **dadurch gekennzeichnet, dass** der Umwelteinfluss die Einwirkung von Chemikalien umfasst.

7.  Verfahren nach Anspruch 1 oder 2, **dadurch gekennzeichnet, dass** der Umwelteinfluss die Einwirkung von Gasen umfasst.

8.  Verfahren nach Anspruch 1 oder 2, **dadurch gekennzeichnet, dass** der Umwelteinfluss die Einwirkung von Mikroorganismen umfasst.

9.  Verfahren nach Anspruch 1 oder 2, **dadurch gekennzeichnet, dass** der Umwelteinfluss die Einwirkung von radioaktiver Strahlung umfasst.

10. Verfahren nach Anspruch 1 oder 2, **dadurch gekennzeichnet, dass** der Umwelteinfluss die Einwirkung von Schallwellen umfasst.

11. Verfahren nach Anspruch 1 oder 2, **dadurch gekennzeichnet, dass** der Umwelteinfluss die Einwirkung von Wärme umfasst.

12. Verfahren nach einem oder mehreren der Ansprüche 1 bis 11, **dadurch gekennzeichnet, dass** der Umwelteinfluss durch Bewitterung der Probe bewirkt wird.

13. Verfahren nach Anspruch 1 oder 2, **dadurch gekennzeichnet, dass** der Umwelteinfluss durch Auftragen von Chemikalien auf die Probe bewirkt wird.

14. Verfahren nach Anspruch 3 oder 4, **dadurch gekennzeichnet, dass** die Intensitätsverteilung I(x, y, $\lambda_U$) als Beugungsmuster auf der Probe erzeugt wird.

15. Verfahren nach Anspruch 3 oder 4, **dadurch gekennzeichnet, dass** die Intensitätsverteilung I(x, y, $\lambda_U$) durch Bestrahlung der Probe durch die Maske, welche eine orts- und wellenlängenabhängige Transmissionsfunktion T(x, y, $\lambda$) aufweist, mit Licht erzeugt wird.

16. Verfahren nach Anspruch 15, **dadurch gekennzeichnet, dass** mit künstlichem oder natürlichem Sonnenlicht bestrahlt wird.

17. Verfahren nach Anspruch 15 oder 16, **dadurch gekennzeichnet, dass** die Maske eine Barcode-Maske ist.

18. Verfahren nach einem der Ansprüche 1 bis 17, **dadurch gekennzeichnet, dass** die Intensitätsverteilung I(x, y) bzw. I(x, y, $\lambda_U$) eine periodische Intensitätsverteilung mit einer Ortsfrequenz $\alpha$ ist.

19. Verfahren nach Anspruch 18, **dadurch gekennzeichnet, dass** die Korrelationsanalyse eine Fourieranalyse ist.

20. Verfahren nach einem der Ansprüche 1 bis 19, **dadurch gekennzeichnet, dass** man die Transmission, Reflektion oder Streuung von Analyselicht im UV-VIS und/oder NIR-Bereich bestimmt.

21. Verfahren nach einem der Ansprüche 1 bis 20, **dadurch gekennzeichnet, dass** man die Transmission, Reflektion oder Streuung von Analysestrahlung durch die Probe für eine Mehrzahl von Wellenlängenbereichen Δλ bestimmt und so eine Mehrzahl von Antwortfunktionen A(x, y, Δλ) für eine Mehrzahl Wellenlängenbereiche Δλ bestimmt.

22. Verfahren nach Anspruch 21, **dadurch gekennzeichnet, dass** man jeweils eine Antwortfunktion für rotes, grünes und blaues Licht durch RGB-Analyse bestimmt.

23. Verfahren nach einem der Ansprüche 1 bis 22, **dadurch gekennzeichnet, dass** man die Reflektion des Analyselichts detektiert.

24. Verfahren nach Anspruch 23, **dadurch gekennzeichnet, dass** man bei der Detektion eine telezentrische Messoptik einsetzt.

25. Verfahren nach einem der Ansprüche 1 bis 22, **dadurch gekennzeichnet, dass** man die Streuung des Analyselichts detektiert.

26. Verfahren nach Anspruch 25, **dadurch gekennzeichnet, dass** man bei der Detektion ein konfokales Farbmesssystem einsetzt.

27. Verfahren nach einem der Ansprüche 1 bis 22, **dadurch gekennzeichnet, dass** man die Reflektion oder Streuung des Analyselichts durch die Probe in Abhängigkeit der Ortskoordinaten (x, y) mit einem Farbscanner detektiert.

28. Verfahren nach einem der Ansprüche 1 bis 22, **dadurch gekennzeichnet, dass** man die Reflektion oder Streuung des Analyselichts durch die Probe in Abhängigkeit der Ortskoordinaten (x, y) mit einer Digitalkamera detektiert.

29. Verfahren nach einem der Ansprüche 1 bis 28, **dadurch gekennzeichnet, dass** man die Antwortfunktion A(x, y, λ) mit einer digitalen Bildauswerteelektronik bestimmt.

30. Verwendung des Verfahrens nach Anspruch 23 oder 24 zur Bestimmung der Änderung des Glanzverhaltens einer Substratoberfläche.

31. Verwendung nach Anspruch 30, **dadurch gekennzeichnet, dass** die Substratoberfläche eine Lackoberfläche ist.

32. Verwendung nach Anspruch 31, **dadurch gekennzeichnet, dass** der Lack ein Autolack ist.

33. Verwendung des Verfahrens nach Anspruch 25 oder 26 zur Bestimmung der Lichtechtheit von Farbmitteln oder mit diesen gefärbten Substraten.

34. Verwendung des Verfahrens nach einem der Ansprüche 1 bis 29 zur Untersuchung der lichtinduzierten oder von photooxidativen Alterung von Stoffen.

35. Verwendung nach Anspruch 34, **dadurch gekennzeichnet, dass** die Stoffe ausgewählt sind aus mit Farbmitteln gefärbten oder ungefärbten Kunststoffen, Lacken, Textilien, Metalle, Papier, Holzartikel, Baustoffen und kosmetischen Formulierungen..

36. Verwendung des Verfahrens nach einem der Ansprüche 1 bis 29 zur Untersuchung der Witterungsbeständigkeit von Stoffen.

37. Verwendung des Verfahrens nach einem der Ansprüche 1 bis 29 zur Untersuchung der Chemikalienbeständigkeit von Stoffen.

38. Verwendung des Verfahrens nach einem der Ansprüche 1 bis 29 zur Untersuchung der Abriebsfestigkeit von Beschichtungen auf einem Substrat.

**Claims**

1.  A method for detecting the change of a physically measurable property of a sample due to an environmental effect, in which

    (i) the sample is subjected to the environmental effect for an action time $\Delta t$, the environmental effect being made to act on the sample with a known position-dependent intensity distribution I(x, y), which is based on a pattern function M(x, y), the action of the environmental effect on the sample being inhomogeneous,
    (ii) the transmission, reflection or scattering of analysis radiation by the sample is subsequently detected as a function of the position coordinates (x, y) of the sample and the wavelength $\lambda$ of the analysis radiation, so as to determine a response function A(x, y, $\lambda$) which describes the intensity of the transmitted, reflected or scattered analysis radiation as a function of the position coordinates (x, y) of the sample and the wavelength $\lambda$,
    (iii) the correlation of the known position-dependent intensity distribution I(x, y) of the environmental effect, or of the pattern function M(x, y) on which this is based, with the response function A(x, y, $\lambda$) is determined by correlation analysis, this correlation being a measure of the change of the physically measurable property of the sample due to the environmental effect.

2.  The method as claimed in claim 1, wherein the environmental effect is made to act on the substrate surface through a mask, which has a specific position-dependent transmission function T(x, y), so as to produce the position-dependent intensity distribution I(x, y) as an image of the mask on the substrate surface.

3.  The method as claimed in claim 1 or 2, wherein the environmental effect consists in the action of radiation, and the intensity distribution is a position- and wavelength-dependent intensity distribution I (x, y, $\lambda_U$) .

4.  The method as claimed in one of claims 1 to 3, wherein the environmental effect comprises the action of light.

5.  The method as claimed in claim 1 or 2, wherein the environmental effect comprises the action of mechanical forces.

6.  The method as claimed in claim 1 or 2, wherein the environmental effect comprises the action of chemicals.

7.  The method as claimed in claim 1 or 2, wherein the environmental effect comprises the action of gases.

8.  The method as claimed in claim 1 or 2, wherein the environmental effect comprises the action of microorganisms.

9.  The method as claimed in claim 1 or 2, wherein the environmental effect comprises the action of radioactive radiation.

10.  The method as claimed in claim 1 or 2, wherein the environmental effect comprises the action of sound waves.

11.  The method as claimed in claim 1 or 2, wherein the environmental effect comprises the action of heat.

12.  The method as claimed in one or more of claims 1 to 11, wherein the environmental effect is caused by weathering of the sample.

13.  The method as claimed in claim 1 or 2, wherein the environmental effect is caused by the application of chemicals to the sample.

14.  The method as claimed in claim 3 or 4, wherein the intensity distribution I(x, y, $\lambda_U$) is produced as a diffraction pattern on the sample.

15.  The method as claimed in claim 3 or 4, wherein the intensity distribution I(x, y, $\lambda_U$) is produced by exposing the sample to light through the mask, which has a position- and wavelength-dependent transmission function T(x, y, $\lambda$).

16.  The method as claimed in claim 15, wherein exposure is carried out with artificial or natural sunlight.

17.  The method as claimed in claim 15 or 16, wherein the mask is a barcode mask.

18.  The method as claimed in one of claims 1 to 17, wherein the intensity distribution I(x, y) or I(x, y, $\lambda_U$) is a periodic intensity distribution with a spatial frequency $\alpha$.

**19.** The method as claimed in claim 18, wherein the correlation analysis is a Fourier analysis.

**20.** The method as claimed in one of claims 1 to 19, wherein the transmission, reflection or scattering of analysis light in the UV-VIS and/or NIR ranges is determined.

**21.** The method as claimed in one of claims 1 to 20, wherein the transmission, reflection or scattering of analysis radiation by the sample is determined for a plurality of wavelength ranges $\Delta\lambda$, so as to determine a plurality of response functions $A(x, y, \Delta\lambda)$ for a plurality of wavelength ranges $\Delta\lambda$.

**22.** The method as claimed in claim 21, wherein a response function is respectively determined for red, green and blue light by RGB analysis.

**23.** The method as claimed in one of claims 1 to 22, wherein the reflection of the analysis light is detected.

**24.** The method as claimed in claim 23, wherein telecentric measurement optics are used for the detection.

**25.** The method as claimed in one of claims 1 to 22, wherein the scattering of the analysis light is detected.

**26.** The method as claimed in claim 25, wherein a confocal color measurement system is used for the detection.

**27.** The method as claimed in one of claims 1 to 22, wherein the reflection or scattering of the analysis light by the sample as a function of the position coordinates (x, y) is detected using a color scanner.

**28.** The method as claimed in one of claims 1 to 22, wherein the reflection or scattering of the analysis light by the sample as a function of the position coordinates (x, y) is detected using a digital camera.

**29.** The method as claimed in one of claims 1 to 28, wherein the response function $A(x, y, \lambda)$ is determined using digital image processing electronics.

**30.** The use of the method as claimed in claim 23 or 24 for determining the change of the luster of a substrate surface.

**31.** The use as claimed in claim 30, wherein the substrate surface is a paint surface.

**32.** The use as claimed in claim 31, wherein the paint is an automobile paint.

**33.** The use of the method as claimed in claim 25 or 26 for determining the light fastness of colorants, or of substrates colored using them.

**34.** The use of the method as claimed in one of claims 1 to 29 for studying the light-induced or photooxidative aging of substances.

**35.** The use as claimed in claim 34, wherein the substances are selected from plastics, optionally colored using colorants, paints, textiles, metals, paper, wooden articles, construction materials and cosmetic formulations.

**36.** The use of the method as claimed in one of claims 1 to 29 for studying the weatherproofness of substances.

**37.** The use of the method as claimed in one of claims 1 to 29 for studying the chemical stability of substances.

**38.** The use of the method as claimed in one of claims 1 to 29 for studying the abrasion resistance of coatings on a substrate.

**Revendications**

**1.** Procédé pour détecter la modification, engendrée par une influence ambiante, d'une propriété physiquement mesurable d'un échantillon, dans lequel

(i) on expose l'échantillon à l'influence ambiante pendant un temps d'action $\Delta$t, dans lequel on fait agir l'influence ambiante sur l'échantillon avec une répartition d'intensité connue en fonction du lieu I(x,y), qui est basée sur une fonction de modèle M(x,y), dans lequel l'action de l'influence ambiante sur l'échantillon n'est pas homogène ;

(ii) on détecte ensuite la transmission, la réflexion ou la dispersion d'un rayonnement d'analyse par l'échantillon en fonction des coordonnées locales (x,y) de l'échantillon et de la longueur d'onde $\lambda$ du rayonnement d'analyse, et on détermine ainsi une fonction de réponse A (x, y, $\lambda$), qui représente l'intensité du rayonnement d'analyse transmis, réfléchi ou dispersé en fonction des coordonnées locales (x,y) de l'échantillon et de la longueur d'onde $\lambda$ ;

(iii) par une analyse de corrélation, on détermine la corrélation de la répartition d'intensité connue en fonction du lieu I (x, y) ou de la fonction de modèle M(x,y) à la base de celle-ci avec la fonction de réponse A (x, y, $\lambda$), dans lequel cette corrélation est une mesure de la modification, engendrée par l'influence ambiante, de la propriété physiquement mesurable de l'échantillon.

2. Procédé selon la revendication 1, **caractérisé en ce que** l'on fait agir l'influence ambiante sur la surface du substrat au moyen d'un masque, qui présente une fonction de transmission déterminée en fonction du lieu T(x,y), et on produit ainsi la répartition d'intensité en fonction du lieu I(x,y) sous forme d'image du masque sur la surface du substrat.

3. Procédé selon la revendication 1 ou 2, **caractérisé en ce que** l'influence ambiante consiste en l'action d'un rayonnement et la répartition d'intensité est une répartition d'intensité en fonction du lieu et de la longueur d'onde I (x, y, $\lambda_U$).

4. Procédé selon l'une quelconque des revendications 1 à 3, **caractérisé en ce que** l'influence ambiante comprend l'action de la lumière.

5. Procédé selon la revendication 1 ou 2, **caractérisé en ce que** l'influence ambiante comprend l'action de forces mécaniques.

6. Procédé selon la revendication 1 ou 2, **caractérisé en ce que** l'influence ambiante comprend l'action de produits chimiques.

7. Procédé selon la revendication 1 ou 2, **caractérisé en ce que** l'influence ambiante comprend l'action de gaz.

8. Procédé selon la revendication 1 ou 2, **caractérisé en ce que** l'influence ambiante comprend l'action de microorganismes.

9. Procédé selon la revendication 1 ou 2, **caractérisé en ce que** l'influence ambiante comprend l'action d'un rayonnement radioactif.

10. Procédé selon la revendication 1 ou 2, **caractérisé en ce que** l'influence ambiante comprend l'action d'ondes sonores.

11. Procédé selon la revendication 1 ou 2, **caractérisé en ce que** l'influence ambiante comprend l'action de la chaleur.

12. Procédé selon l'une quelconque des revendications 1 à 11, **caractérisé en ce que** l'influence ambiante est engendrée par l'action des intempéries sur l'échantillon.

13. Procédé selon la revendication 1 ou 2, **caractérisé en ce que** l'influence ambiante est engendrée par l'application de produits chimiques sur l'échantillon.

14. Procédé selon la revendication 3 ou 4, **caractérisé en ce que** l'on produit la répartition d'intensité I (x, y, $\lambda_U$) sous la forme d'une figure de diffraction sur l'échantillon.

15. Procédé selon la revendication 3 ou 4, **caractérisé en ce que** l'on produit la répartition d'intensité I (x,y, $\lambda_U$) avec de la lumière par éclairage de l'échantillon à travers le masque, qui présente une fonction de transmission en fonction du lieu et de la longueur d'onde T (x, y, $\lambda$).

16. Procédé selon la revendication 15, **caractérisé en ce que** l'on éclaire avec une lumière solaire artificielle ou naturelle.

17. Procédé selon la revendication 15 ou 16, **caractérisé en ce que** le masque est un masque à code barres.

**18.** Procédé selon l'une quelconque des revendications 1 à 17, **caractérisé en ce que** la répartition d'intensité I (x, y) ou I (x, y, $\lambda_U$) est une répartition d'intensité périodique avec une fréquence locale $\alpha$.

**19.** Procédé selon la revendication 18, **caractérisé en ce que** l'analyse de corrélation est une analyse de Fourier.

**20.** Procédé selon l'une quelconque des revendications 1 à 19, **caractérisé en ce que** l'on détermine la transmission, la réflexion ou la dispersion de la lumière d'analyse dans le domaine UV-VIS et/ou NIR.

**21.** Procédé selon l'une quelconque des revendications 1 à 20, **caractérisé en ce que** l'on détermine la transmission, la réflexion ou la dispersion du rayonnement d'analyse par l'échantillon pour une multiplicité de domaines de longueur d'onde $\Delta\lambda$, et on détermine ainsi une multiplicité de fonctions de réponse A (x, y, $\Delta\lambda$) pour une multiplicité de domaines de longueur d'onde $\Delta\lambda$.

**22.** Procédé selon la revendication 21, **caractérisé en ce que** l'on détermine respectivement une fonction de réponse pour la lumière rouge, verte et bleue par analyse RVB.

**23.** Procédé selon l'une quelconque des revendications 1 à 22, **caractérisé en ce que** l'on détecte la réflexion de la lumière d'analyse.

**24.** Procédé selon la revendication 23, **caractérisé en ce que** l'on utilise pour la détection une optique de mesure télécentrique.

**25.** Procédé selon l'une quelconque des revendications 1 à 22, **caractérisé en ce que** l'on détecte la dispersion de la lumière d'analyse.

**26.** Procédé selon la revendication 25, **caractérisé en ce que** l'on utilise pour la détection un système confocal de mesure de couleurs.

**27.** Procédé selon l'une quelconque des revendications 1 à 22, **caractérisé en ce que** l'on détecte la réflexion ou la dispersion de la lumière d'analyse par l'échantillon en fonction des coordonnées locales (x,y) avec un scanner de couleurs.

**28.** Procédé selon l'une quelconque des revendications 1 à 22, **caractérisé en ce que** l'on détecte la réflexion ou la dispersion de la lumière d'analyse par l'échantillon en fonction des coordonnées locales (x,y) avec une caméra numérique.

**29.** Procédé selon l'une quelconque des revendications 1 à 28, **caractérisé en ce que** l'on détermine la fonction de réponse A (x, y, $\lambda$) avec une électronique de traitement d'images numérique.

**30.** Utilisation du procédé selon la revendication 23 ou 24 pour la détermination de la modification de la brillance d'une surface de substrat.

**31.** Utilisation selon la revendication 30, **caractérisée en ce que** la surface de substrat est une surface laquée.

**32.** Utilisation selon la revendication 31, **caractérisée en ce que** la laque est une laque pour carrosserie.

**33.** Utilisation du procédé selon la revendication 25 ou 26 pour la détermination de la stabilité à la lumière de matières colorantes ou de substrats colorés avec celles-ci.

**34.** Utilisation du procédé selon l'une quelconque des revendications 1 à 29 pour étudier le vieillissement de matières induit par la lumière ou par photo-oxydation.

**35.** Utilisation selon la revendication 34, **caractérisée en ce que** les matières sont sélectionnées parmi les matières plastiques colorées ou non colorées avec des matières colorantes, des laques, des textiles, des métaux, du papier, des articles en bois, des matériaux de construction et des formulations cosmétiques.

**36.** Utilisation du procédé selon l'une quelconque des revendications 1 à 29 pour étudier la résistance aux intempéries de matières.

**37.** Utilisation du procédé selon l'une quelconque des revendications 1 à 29 pour étudier la résistance de matières aux produits chimiques.

**38.** Utilisation du procédé selon l'une quelconque des revendications 1 à 29 pour étudier la résistance à l'abrasion de revêtements sur un substrat.

## Figur 1

Figur 2

Figur 3

# Figur 4

# Figur 5

# Figur 6

Figur 7

Figur 8

Figur 9